# EUROPÄISCHE PATENTSCHRIFT

(11) **EP 2 803 767 B1**
(45) Veröffentlichungstag und Bekanntmachung des Hinweises auf die Patenterteilung: **17.10.2018**
(21) Anmeldenummer: 14167209.7
(22) Anmeldetag: 06.05.2014
(51) Int. Cl.: E01F 3/00, E01C 9/00

(54) **Verbundsystem für einen Hubschrauberlandeplatz sowie Verfahren zur Herstellung desselben**
Composite system for a helicopter landing pad and method for the production thereof
Système composite pour une hélistation et son procédé de fabrication

(30) Priorität: 17.05.2013 AT 500722013
(43) Veröffentlichungstag der Anmeldung: 19.11.2014
(73) Patentinhaber: Urbas Maschinenfabrik Gesellschaft M.B.H., 9100 Völkermarkt (AT)
(72) Erfinder: Janesch, Arnold, 9112 Griffen (AT)
(74) Vertreter: Wirnsberger, Gernot

(56) Entgegenhaltungen:
- AT-U2- 8 977
- CH-A- 188 249
- KR-A- 20120 028 762
- KR-B1- 101 205 225
- US-A- 6 073 293
- US-A1- 2004 128 939
- US-A1- 2008 066 409

## Beschreibung

Die Erfindung betrifft ein Verbundsystem für einen Hubschrauberlandeplatz, gemäß dem Oberbegriff des Anspruchs 1.

Darüber hinaus betrifft die Erfindung ein Verfahren zur Herstellung eines Verbundsystems, wie in Anspruch 10 definiert.

Hubschrauberlandeplätze werden häufig auf Gebäuden angeordnet, wobei einerseits eine durch den Hubschrauberlandeplatz hervorgerufene zusätzliche Gewichtsbelastung des Gebäudes gering sein soll. Andererseits soll der Hubschrauberlandeplatz auch mit geringen Kosten herstellbar sein.

Aus dem Stand der Technik sind verschiedene Technologien bekannt, einen solchen Hubschrauberlandeplatz oder ähnliche Bauwerke mit belastbaren, freitragenden Flächen zu bilden. Beispielsweise sind derartige Verbundsysteme aus der KR 2012 0028762 A und der US 2004/128939 A1 bekannt. Einerseits kann dazu Stahlbeton für eine kostengünstige Herstellung des Hubschrauberlandeplatzes eingesetzt werden, wobei Druckkräfte von Beton und Zugkräfte von in den Beton integrierten Stahlträgern aufgenommen werden. Nachteilig bei durch Stahlbeton gebildeten Hubschrauberlandeplätzen ist jedoch ein hohes Gewicht, welches eine massive Bauweise eines den Hubschrauberlandeplatz tragenden Gebäudes erfordert.

Andererseits sind Aluminiumkonstruktionen bekannt geworden, wobei sowohl eine Unterkonstruktion als auch die belastbare Fläche durch Aluminiumbauteile gebildet werden, sodass sowohl Zug- als auch Druckkräfte von Aluminiumelementen aufgenommen werden. Mit dieser Bauweise kann daher ein entsprechender Hubschrauberlandeplatz mit geringem Gewicht hergestellt werden. Jedoch ist eine derartige Aluminiumkonstruktion aufwendig herzustellen, wodurch hohe Kosten entstehen.

Aufgabe der Erfindung ist es daher, ein Verbundsystem der eingangs genannten Art anzugeben, mit welchem ein Hubschrauberlandeplatz mit freitragenden, belastbaren Flächen und niedrigem Gewicht kostengünstig herstellbar ist.

Weiter soll ein Verfahren der eingangs genannten Art angegeben werden, mit welchem ein entsprechendes Verbundsystem einfach hergestellt werden kann.

Die erste Aufgabe wird durch die Merkmalskombination des Verbundsystems nach Anspruch 1 gelöst.

Im Unterschied zu Verbundwerkstoffen des Standes der Technik wie Stahlbeton wird bei einem erfindungsgemäßen Verbundsystem eine auf Zug belastbare Verbindung zwischen dem Träger und Beton nicht durch ein Einbetten des Trägers in Beton erreicht, sondern durch eine mittelbare Verbindung des Trägers mit dem ausgehärteten Material durch einen mit dem Träger meist stoffschlüssig verbundenen Bolzen. Dadurch ist eine gute Übertragbarkeit von Zug- und Druckkräften gewährleistet. Die freitragende, belastbare Fläche für eine Hubschrauberlandung kann mit einem derartigen Verbundsystem durch die Schicht aus ausgehärtetem Material einfach gebildet werden, weswegen das erfindungsgemäße Verbundsystem zur Herstellung eines kostengünstigen Hubschrauberlandeplatz mit geringem Gewicht geeignet ist.

Erfindungsgemäß ist die Schicht ausschließlich zwischen einer Oberfläche des Trägers, an welcher der zumindest eine Bolzen mit dem Träger verbunden ist, und einer vom Träger beabstandeten, insbesondere zur Oberfläche parallelen Fläche angeordnet. Damit ist ein Gewicht des Verbundsystems wesentlich reduziert, weil Beton nicht wie bei herkömmlichen Stahlbetonbauteilen durchgehend im Bauteil eingesetzt ist, sondern nur als Schicht an einer Seite des Trägers vorliegt. Dadurch wird ein besonders geringes Gewicht erreicht. Da die Schicht ausschließlich zwischen der Oberfläche und der Fläche angeordnet ist, ist die Schicht ausschließlich mittelbar mit dem Träger verbunden, wobei Kräfte durch die Bolzen übertragen werden. Um eine gute Spannungsverteilung im Verbundsystem zu erreichen, ist es von Vorteil, wenn der zumindest eine Bolzen auf einem Obergurt eines Stahlträgers angeordnet ist, welcher üblicherweise ein I-Profil aufweist.

Für eine gute Verbindung zwischen dem ausgehärteten Material und dem Bolzen ist normalerweise vorgesehen, dass der Bolzen eine profilierte Oberfläche aufweist. Dazu können beispielsweise Rippen an der Oberfläche des Bolzens vorgesehen sein. Weiter ist es zweckmäßig, wenn der Bolzen mit einem über eine Bolzenlänge diskontinuierlichen Querschnitt, insbesondere als Kopfbolzen, ausgebildet ist, um eine tragfähige Verbindung zwischen ausgehärtetem Material und Träger zu erreichen. Für eine einfache Herstellung ist es günstig, wenn der Bolzen einen etwa zylindrischen Querschnitt aufweist, wobei ein Durchmesser etwa 5 % bis 20 % der Bolzenlänge beträgt. Die Verbindung des Bolzens mit dem Träger kann beispielsweise durch Schweißen hergestellt sein.

Eine vorteilhafte Spannungsverteilung im Verbundsystem wird erreicht, wenn eine Bolzenlänge 30 % bis 150 % einer Trägerhöhe beträgt. Üblicherweise wird ein Bolzen eingesetzt, welcher eine Bolzenlänge aufweist, die geringer ist als die Trägerhöhe.

Um eine gute Stabilität der Schicht aus dem ausgehärteten Material zu gewährleisten, ist bevorzugt vorgesehen, dass eine Höhe der Schicht aus ausgehärtetem Material 20 % bis 200 %, vorzugsweise 30 % bis 100 %, insbesondere 40 % bis 70 %, einer Trägerhöhe beträgt.

Es hat sich bewährt, dass das ausgehärtete Material den Bolzen endseitig vollständig bedeckt, um eine besonders gute Kraftübertragung von der Schicht an den Träger zu gewährleisten.

Die Schicht aus dem ausgehärteten Material kann direkt als Fahrbahn oder Landeplatz eingesetzt werden, wenn durch das ausgehärtete Material oberhalb des Bolzens eine auf eine Bolzenachse etwa senkrechte, plane Fläche gebildet ist. Dadurch ist auch eine hohe Stabilität der Fläche gewährleistet. Üblicherweise ist ein Gefälle an der Fläche von etwa 1 % vorgesehen, um ein Abfließen von oberflächlichem Wasser zu ermöglichen.

Mit Vorteil sind die mindestens zwei Träger mit etwa parallelen Bolzen vorgesehen, wobei die Träger über die Bolzen durch das ausgehärtete Material verbunden sind. Dadurch können auch größere Bauteile einfach und mit geringem Gewicht gebildet werden, wobei die Träger unter der Fläche auch durch weitere Träger verbunden sein können, um eine Fachwerkkonstruktion zu bilden. Ein Abstand zwischen den Bolzen beträgt normalerweise zwischen 50 % und 300 %, insbesondere 100 % bis 200 %, der Bolzenlänge. Grundsätzlich kann die Schicht direkt am Träger anliegen, wodurch Druckkräfte gut an den Träger übertragen werden. Weiter kann auch vorgesehen sein, dass ein Raum zwischen den Bolzen vollständig mit ausgehärtetem Material ausgefüllt ist. Ein besonders geringes Gewicht wird erreicht, wenn die Schicht zumindest teilweise, bevorzugt durchgehend, vom Träger beabstandet angeordnet ist, wobei ein Schichtabstand zwischen der Schicht und dem Träger vorzugsweise 10 % bis 90 %, insbesondere 50 % bis 70 %, einer Höhe der Schicht beträgt. Der Träger und die Schicht sind dabei nur mittelbar verbunden, wobei Kräfte durch die Bolzen von der Schicht an den Träger übertragen werden.

Es ist erfindungsgemäß vorgesehen, dass zwischen dem Träger und der Schicht eine Abdeckung als verlorene Schalung angeordnet ist, vorzugsweise ein entlang einer Längsrichtung Knicke aufweisendes Blech. Dadurch ergibt sich eine günstige Fertigung, weil die Schalung im Verbundsystem verbleibt, wobei eine Höhe des geknickten Bleches üblicherweise dem Schichtabstand entspricht. Mit Vorteil wird ein geknicktes Blech als Schalung eingesetzt, um eine besonders einfach herstellbare und stabile Schalung zu bilden, die dauerhaft im Verbundsystem verbleibt. In der Regel wird dazu ein mit zwei Knicken versehenes Blech eingesetzt, welches einen trapezförmigen Querschnitt einschließt.

Vorgesehen sein kann, dass der Beton direkt auf mehrere nebeneinanderliegende Trapezbleche gegossen wird, wobei auch Zwischenräume zwischen den Trapezblechen im Bereich der Bolzen durch Beton ausgefüllt werden. Dabei werden in den Zwischenräumen an der Schicht Ausbuchtungen gebildet, welche im Bereich der Bolzen in direktem Kontakt mit dem Träger stehen können. Um ein Gewicht zu minimieren, ist jedoch normalerweise vorgesehen, dass zwischen dem Träger und der Schicht ein Füllmaterial, insbesondere Mineralwolle, vorzugsweise Steinwolle, angeordnet ist. Damit können die Zwischenräume zwischen den Blechen bei geringem Gewicht ausgefüllt werden, wobei eine mit Oberkanten der Bleche plan abschließende Unterlage gebildet wird, aus welcher die Bolzen aufragen. Bei einer Fertigung wird auf diese plane Unterlage Beton gegossen, wodurch die Schicht gebildet wird.

Insbesondere um einen Hubschrauberlandeplatz einfach von Eis befreien zu können, hat es sich als günstig erwiesen, wenn in der Schicht eine Heizung vorgesehen ist. Diese kann beispielsweise durch elektrische Leitungen und/oder durch Heißwasser führende Rohre gebildet sein.

Für eine sehr einfache Herstellung eines Bauteiles hat es sich als zweckmäßig erwiesen, wenn eine Fachwerkkonstruktion aus mehreren Trägern gebildet ist, welche Kopfbolzen aufweisen, die etwa senkrecht auf die Träger sowie die zu bildende Fläche positioniert sind. Anschließend wird eine Schalung für ein aushärtendes Material durch ein Abdecken von Bereichen zwischen den Trägern mit als Blechen ausgeführten Abdeckungen hergestellt, wonach Zwischenräume zwischen den Blechen mit Mineralwolle ausgefüllt werden. Durch Gießen von aushärtbarem Material, vorzugsweise Beton, auf eine durch die Schalung und Mineralwolle gebildete, plane Unterlage und anschließendes Aushärten dieses Materials wird eine mit den Trägern verbundene und zu diesen etwa parallele Fläche gebildet, welche durch die Bolzen eine gute Kraftübertragung zu den Trägern ermöglicht. Dabei verbleiben die Bleche als verlorene Schalung zwischen den Trägern und der Schicht.

Die Vorteile eines erfindungsgemäßen Verbundsystems können sehr gut umgesetzt werden, wenn bei einem Bauwerk, insbesondere einem Hubschrauberlandeplatz, welches eine tragende Fachwerkkonstruktion sowie eine mit der Fachwerkkonstruktion verbundenen Fläche aus einem ausgehärteten Material zur Aufnahme von Druckkräften aufweist, ein erfindungsgemäßes Verbundsystem zur Verbindung der Fachwerkkonstruktion mit der Fläche vorgesehen ist. Die Fläche wird dabei vorzugsweise durch die Schicht aus Beton gebildet, welche parallel zu Oberflächen der Träger und zu diesen beabstandet angeordnet ist, wobei eine Verbindung der Fläche mit den Trägern durch Bolzen erfolgt.

Zweckmäßigerweise weist die Fachwerkkonstruktion sternförmig angeordnete I-Träger auf, mit welchen die Fläche durch Bolzen verbunden ist. Somit wird ein vorzugsweise runder Hubschrauberlandeplatz mit besonders geringem Gewicht und hoher Belastbarkeit einfach gebildet werden. Die sternförmig angeordneten I-Träger werden in der Regel durch eine unter diesen positionierte rechteckförmige Fachwerkkonstruktion abgestützt, welche ebenfalls aus derartigen I-Trägern besteht.

Die weitere Aufgabe wird erfindungsgemäß dadurch gelöst, dass bei einem Verfahren der eingangs genannten Art ein Bolzen mit einem Träger verbunden wird, wonach der Bolzen zumindest teilweise mit einem aushärtbaren Material, insbesondere Beton, umgossen wird, wobei eine mit dem Träger verbundene Schicht gebildet wird. Dadurch wird nach Aushärten des Materials auf einfache Weise und mit geringen Kosten eine belastbare Verbindung eines Trägers mit einer Betonfläche zur Konstruktion eines Hubschrauberlandeplatzes hergestellt.

Große Bauteile können einfach gebildet werden, wenn mehrere Bolzen aufweisende Träger durch eine durchgehende Schicht aus aushärtbarem Material verbunden werden. Um ein sehr leichtes Bauteil zu bilden, ist die Schicht erfindungsgemäß nur zwischen üblicherweise in einer Ebene liegenden Oberflächen der Träger und einer von den Trägern beabstandeten und zu den Oberflächen vorzugsweise parallelen Fläche angeordnet. Ein geringes Gewicht des Verbundsystems wird erreicht, wenn die Schicht durch einen Schichtabstand von den Trägern beabstandet ist.

Erfindungsgemäß sind zumindest zwei Träger vorgesehen, wobei eine freie Fläche zwischen den Trägern mit zumindest einer Abdeckung, insbesondere einem Blech, abgedeckt wird, wobei die Bolzen die zumindest eine Abdeckung überragen, wonach das aushärtbare Material auf die Abdeckung gegossen wird. Dabei bildet die Abdeckung auf einfache Weise eine Unterlage bzw. Schalung für das aushärtbare Material zwischen den Trägern. Die Bleche können dazu mit den Trägern fix verbunden oder alternativ nur auf diese gelegt werden, um eine im Wesentlichen durchgehende Schalung für den Beton zu bilden. Weil die Bolzen die Bleche überragen, ergibt sich bei einem Aushärten des Materials eine mittelbare Verbindung zwischen den Trägern und dem ausgehärteten Material über die Bolzen. Normalerweise verbleiben die Bleche nach einem Aushärten des Betons als verlorene Schalungen im Verbundsystem, wobei diese auch zu einer Festigkeit beitragen.

Mit Vorteil werden mehrere Abdeckungen nebeneinander angeordnet, wonach ein Zwischenraum zwischen den Abdeckungen mit einem Füllmaterial, insbesondere Mineralwolle, bevorzugt Steinwolle, ausgefüllt wird, wobei insbesondere eine ebene Unterlage für die Schicht gebildet wird. Alternativ kann auch Glaswolle eingesetzt werden.

Um eine dünne und damit kostengünstige Abdeckung einsetzen zu können, wird in der Regel eine zumindest einen Knick aufweisende Abdeckung eingesetzt.

Bevorzugt ist vorgesehen, dass eine zwei parallele Knicke aufweisende und einen trapezförmigen Querschnitt an drei Seiten einschließende Abdeckung eingesetzt wird. Einerseits wird dadurch eine Stabilität der Abdeckung erhöht, sodass für ein Abstützen des aushärtbaren Materials ein dünnes Blech ausreichend ist. Andererseits hat sich ein trapezförmiger Querschnitt als vorteilhaft für im ausgehärteten Material bei Belastung auftretende Spannungen sowie eine Festigkeit des Verbundsystems erwiesen.

Nach Anordnung der Abdeckung auf den Trägern wird zweckmäßigerweise aushärtbares Material auf die Abdeckung gegossen, bis das aushärtbare Material Enden der Bolzen vollständig bedeckt. Somit wird bei Aushärten des Materials auf einfache Weise eine plane, geschlossene Fläche gebildet, welche beispielsweise als Fahrbahn oder Landeplatz eingesetzt werden kann, ohne dass die Bolzen oder die Träger in die Fläche ragen.

Den Hubschrauberlandeplatz kann besonders einfach von Eis befreit werden, wenn bereits bei einer Herstellung in die Schicht eine Heizung integriert wird. Üblicherweise werden dazu als Heizungsrohre oder elektrische Heizwiderständeausgebildete Heizelemente verteilt beim Betonieren in der Schicht angeordnet und von Beton eingeschlossen.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 ein erfindungsgemäßes Verbundsystem;
Fig. 2 eine weitere Ausführung eines erfindungsgemäßen Verbundsystems;
Fig. 3 eine Fachwerkkonstruktion eines Hubschrauberlandeplatzes.

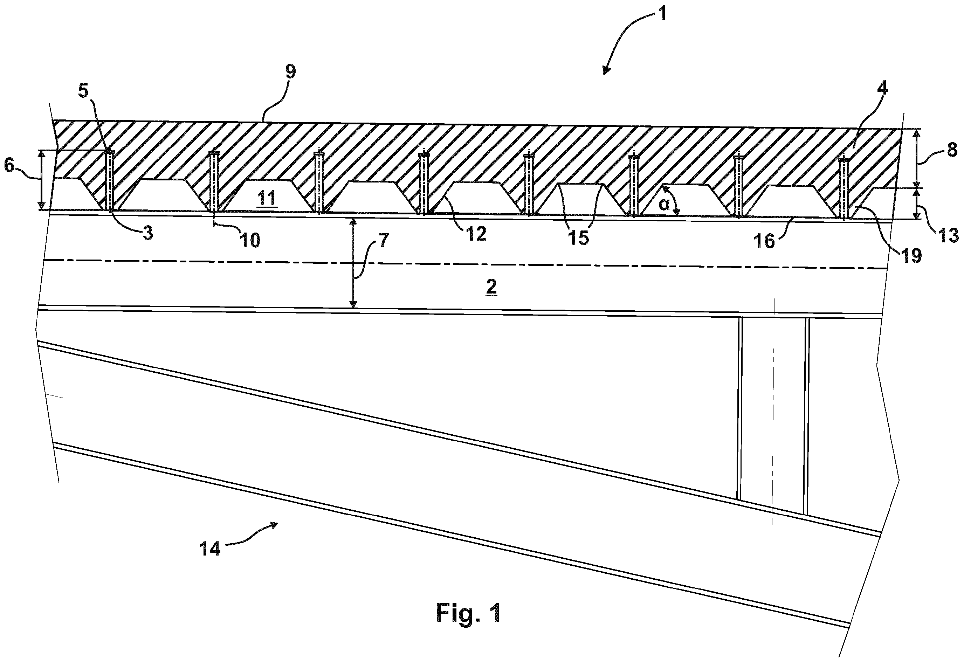

Fig. 1 zeigt ein erfindungsgemäßes Verbundsystem 1, welches mit einer Fachwerkkonstruktion 14 verbunden und Teil eines Hubschrauberlandeplatzes ist. Ersichtlich ist, dass an einer Oberfläche 16 eines Trägers 2 mehrere Bolzen 3 im Wesentlichen parallel sind, wobei eine Bolzenachse 10 etwa vertikal und etwa senkrecht zum Träger 2 ausgerichtet ist. Die Bolzen 3 verbinden eine Schicht 4 aus ausgehärtetem Material mit den Trägern 2. Im Ausführungsbeispiel ist Beton als ausgehärtetes Material vorgesehen. Angeordnet ist die Schicht 4 nur zwischen der Oberfläche 16 des Trägers 2, auf welcher die Bolzen 3 mit dem Träger 2 verbunden sind, und einer zu dieser Oberfläche 16 etwa parallelen Fläche 9, wodurch ein geringes Gewicht bei hoher Festigkeit erreicht wird.

Für eine gute Anbindung des Betons an die Bolzen 3 sind diese mit einem verbreiterten, endseitigen Kopf 5 als Kopfbolzen ausgeführt. Alternativ oder ergänzend kann für eine gute Anbindung an den Beton auch vorgesehen sein, dass die Bolzen 3 eine beispielsweise mit Rillen profilierte Zylinderoberfläche aufweisen. Um an einer Oberseite der Schicht 4 die üblicherweise plane Fläche 9 aus Beton zu bilden, überragt eine Höhe 8 der Schicht 4 die Bolzen 3, sodass diese mit Ausnahme einer mit dem Träger 2 verbundenen Bodenfläche vollständig von Beton umgeben sind.

Im dargestellten Ausführungsbeispiel beträgt die Bolzenlänge 6 etwa 150 mm und die Höhe 8 der Schicht 4 etwa 150 mm. Dadurch wird eine hohe Festigkeit bei geringem Gewicht erreicht. Für eine bevorzugte Verteilung von Spannungen innerhalb des Verbundsystems 1 hat es sich weiter als vorteilhaft erwiesen, wenn die Bolzenlänge 6 30 % bis 150 % einer Trägerhöhe 7 des Trägers 2 entspricht, auf welchem die Bolzen 3 normalerweise mittig an einem Obergurt angeordnet sind. Im dargestellten Beispiel beträgt die Trägerhöhe 7 etwa 270 mm, wobei ein Träger 2 mit einem I-förmigen Querschnitt eingesetzt wird, welcher auch Doppel-T-Träger genannt wird.

Das dargestellte Verbundsystem 1 ist Teil einer einen Hubschrauberlandeplatz bildenden Fachwerkkonstruktion 14, wobei mehrere verbundene Träger 2 vorgesehen sind, welche etwa parallele Bolzen 3 aufweisen. Die Träger 2 sind über die Bolzen 3 durch eine durchgehende Schicht 4 aus Beton verbunden. Zur Herstellung werden zwischen den Trägern 2 Bleche 12 als Abdeckungen positioniert, die eine Schalung bilden, auf welche der Beton gegossen wird.

Wie dargestellt sind die Bleche 12 im Ausführungsbeispiel geknickt, wobei zwei etwa parallele Knicke 15 vorgesehen sind, welche sich entlang einer Längsrichtung der Bleche 12 erstrecken. Dadurch schließen die Bleche 12 einen etwa trapezförmigen Querschnitt an drei Seiten ein und können bei geringer Blechdicke hohe Kräfte aufnehmen. Die nur als Linien dargestellten Bleche 12 erstrecken sich senkrecht zur dargestellten Zeichenebene von einem Träger 2 zu einem weiteren Träger 2. Im Verbundsystem 1 verbleiben die Bleche 12 wie abgebildet als verlorene Schalungen, die auch zu einer Festigkeit des Verbundsystems 1 beitragen. Aufgrund der geknickten Bleche 12 ergeben sich im Verbundsystem 1 Hohlräume 11 mit einem zu den Blechen 12 korrespondierenden, trapezförmigen Querschnitt.

Zwischen den Blechen 12 bilden sich bei der dargestellten Ausführung an der Schicht 4 durch Beton Ausbuchtungen 19, welche Zwischenräume zwischen den Blechen 12 und dem Träger 2 um die Bolzen 3 ausfüllen. Die Schicht 4 ist dabei durch diese aus Beton bestehenden Ausbuchtungen 19 sowie die Bolzen 3 mit dem Träger 2 verbunden.

Als günstig für eine Optimierung von Gewicht und Festigkeit des Verbundsystems 1 hat es sich dabei erwiesen, wenn ein Schichtabstand 13 zwischen Schicht 4 und Träger 2 10 % bis 90 %, üblicherweise 50 % bis 70 %, einer Höhe 8 der Schicht 4 aus Beton beträgt. Im Ausführungsbeispiel beträgt der Schichtabstand 13 etwa 85 mm. Weiter ist für eine Optimierung der Blechdicke bevorzugt vorgesehen, dass ein Trapezwinkel α 40° bis 70°, insbesondere 50° bis 60°, beträgt.

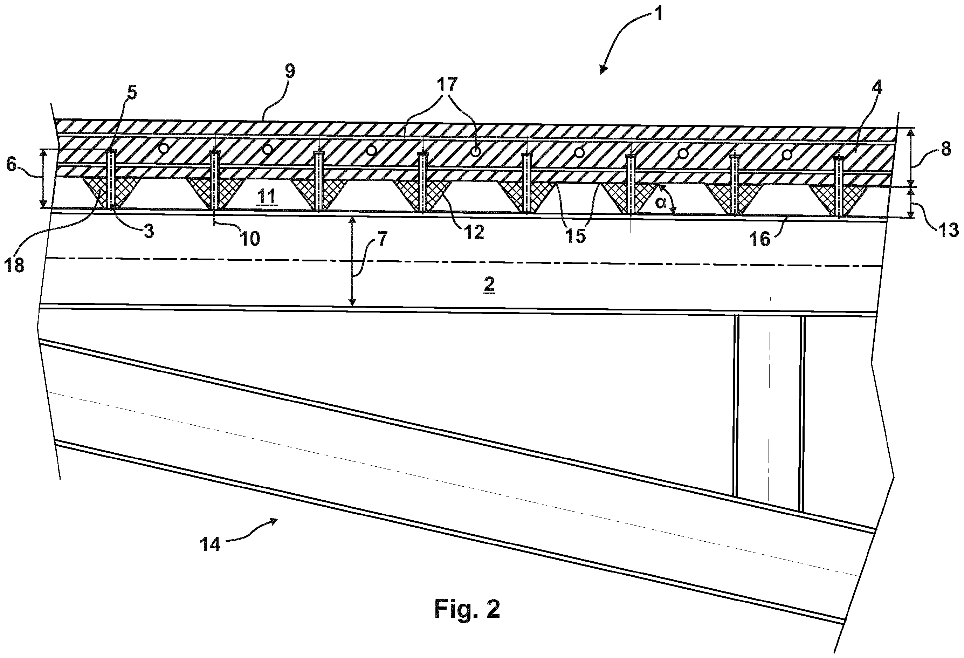

Fig. 2 zeigt eine weitere Ausführung eines erfindungsgemäßen Verbundsystems 1, welches grundsätzlich wie ein Verbundsystem 1 nach Fig. 1 aufgebaut ist. Jedoch sind hier Zwischenräume zwischen den Blechen 12 nicht durch Ausbuchtungen 19, sondern durch Mineralwolle 18 ausgefüllt, wobei eine etwa ebene Unterlage für den Beton gebildet wird. Dadurch ist ein Gewicht des Verbundsystems 1 weiter reduziert. Darüber hinaus weist das dargestellte Verbundsystem 1 Heizelemente 17 auf, durch welche die Schicht 4 beheizbar ist. Vorgesehen sind Heizelemente 17 in mehreren Ebenen und Richtungen, um ein einfaches Enteisen der als Hubschrauberlandeplatz eingesetzten Fläche 9 zu ermöglichen. Durch die Mineralwolle 18 zwischen der Schicht 4 und den Trägern 2 wird ein Wärmefluss von den Heizelementen 17 an die Träger 2 weitgehend verhindert.

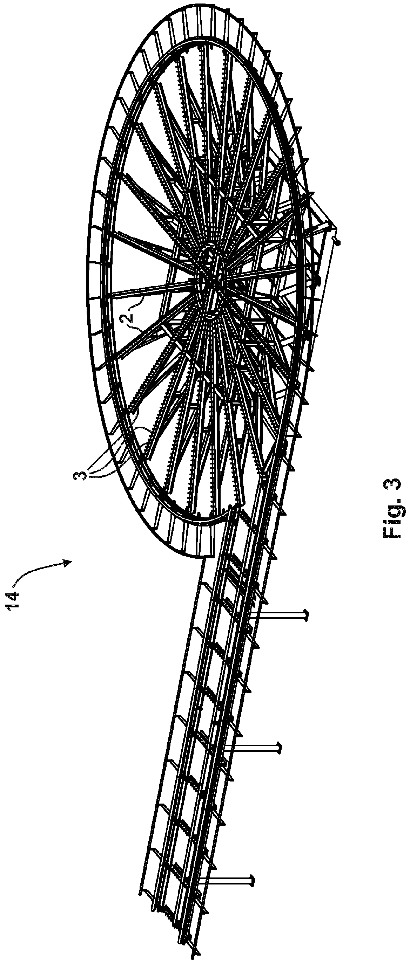

Fig. 3 zeigt eine Fachwerkkonstruktion 14 eines Hubschrauberlandeplatzes, welche Träger 2 aufweist, die mit Bolzen 3 versehen sind, um an einer Oberseite mittels eines erfindungsgemäßen Verbundsystems 1 eine im Wesentlichen ebene Fläche 9 aus Beton für einen Hubschrauber bereitzustellen. Um ein besonders geringes Gewicht und eine hohe Belastbarkeit des Hubschrauberlandeplatzes zu erreichen, sind die Träger 2 wie ersichtlich sternförmig und regelmäßig entlang eines Kreises angeordnet, auf welchem in weiterer Folge die Fläche 9 zum Landen von Hubschraubern gebildet wird.

Mit einem erfindungsgemäßen Verbundsystem 1 können Hubschrauberlandeplätze sowie weitere freitragende bzw. auskragende Bauteile, welche sowohl mit Zugspannungen als auch mit Druckspannungen belastet werden, einfach und mit geringem Gewicht gebildet werden.

Ein mit einem Fachwerk nach Fig. 3 gebildeter Hubschrauberlandeplatz weist bei einer Ausführung mit einem erfindungsgemäßen Verbundsystem 1 und Stahlträgern ein Gewicht von etwa 180 Tonnen auf. Bei einer Ausführung in einer bekannten Stahlbeton-Verbund-Bauweise würde ein Gewicht etwa 800 Tonnen betragen, sodass eine Unterkonstruktion wesentlich massiver ausgebildet werden müsste. Eine alternative Aluminiumkonstruktion könnte zwar mit einem Gewicht von nur etwa 150 Tonnen ausgeführt werden, wäre jedoch wesentlich teurer herzustellen.

Somit bietet ein erfindungsgemäßer Hubschrauberlandeplatz gegenüber einer Stahlbeton-Bauweise Vorteile in Bezug auf eine Gewichtsbelastung und gegenüber einer Aluminiumkonstruktion Vorteile in Bezug auf Herstellkosten.

Es versteht sich, dass ein erfindungsgemäßes Verbundsystem 1 neben einem Hubschrauberlandeplatz auch für andere Bauwerke einsetzbar ist, beispielsweise Brücken oder Dächer, welche entsprechende Anforderungen an freitragende Bauteile aufweisen.

## Patentansprüche

1. Verbundsystem (1) für einen Hubschrauberlandeplatz, umfassend zumindest zwei Träger (2) sowie eine Schicht (4) aus ausgehärtetem Material, die an einer Seite der Träger (2) vorgesehen ist, welche Schicht (4) durch an den Trägern (2) angeordnete Bolzen (3) mit den Trägern (2) starr verbunden ist, **dadurch gekennzeichnet, dass** die Schicht (4) ausschließlich zwischen der Oberfläche der Träger, an welcher die Bolzen (3) mit den Trägern (2) verbunden sind und einer zu dieser Oberfläche beabstandeten Fläche angeordnet ist, so dass die Schicht (4) ausschließlich mittelbar mit den Trägern (2) verbunden ist, wobei Kräfte durch die Bolzen (3) übertragen werden, wobei zwischen den Trägern (2) und der Schicht (4) eine sich zwischen den Trägern (2) erstreckende, freie Fläche (9) abdeckende Abdeckung als verlorene Schalung angeordnet ist, welche von den Bolzen (3) überragt wird, wobei das ausgehärtete Material auf der Abdeckung gegossen wurde.

2. Verbundsystem (1) nach Anspruch 1, **dadurch gekennzeichnet, dass** durch das ausgehärtete Material oberhalb des Bolzens (3) eine auf eine Bolzenachse (10) etwa senkrechte, plane Fläche (9) gebildet ist.

3. Verbundsystem (1) nach Anspruch 1 oder 2, **dadurch gekennzeichnet, dass** die zumindest zwei Träger (2) mit etwa parallelen Bolzen (3) vorgesehen sind, wobei die Träger (2) über die Bolzen (3) durch das ausgehärtete Material verbunden sind.

4. Verbundsystem (1) nach einem der Ansprüche 1 bis 3, **dadurch gekennzeichnet, dass** die Schicht (4) zumindest teilweise, bevorzugt durchgehend, vom Träger (2) beabstandet angeordnet ist, wobei ein Schichtabstand (13) zwischen der Schicht (4) und dem Träger (2) vorzugsweise 10 % bis 90 %, insbesondere 50 % bis 70 %, einer Höhe (8) der Schicht (4) beträgt.

5. Verbundsystem (1) nach einem der Ansprüche 1 bis 4, **dadurch gekennzeichnet, dass** die Abdeckung ein entlang einer Längsrichtung Knicke (15) aufweisendes Blech (12) ist.

6. Verbundsystem (1) nach einem der Ansprüche 1 bis 5, **dadurch gekennzeichnet, dass** zwischen dem Träger (2) und der Schicht (4) ein Füllmaterial, insbesondere Mineralwolle (18), bevorzugt Steinwolle, angeordnet ist.

7. Verbundsystem (1) nach einem der Ansprüche 1 bis 6, **dadurch gekennzeichnet, dass** in der Schicht (4) eine Heizung vorgesehen ist.

8. Bauwerk, insbesondere Hubschrauberlandeplatz, aufweisend eine tragende Fachwerkkonstruktion (14) sowie eine mit der Fachwerkkonstruktion (14) verbundene Fläche (9) aus einem ausgehärteten Material zur Aufnahme von Druckkräften, **dadurch gekennzeichnet, dass** ein Verbundsystem (1) nach einem der Ansprüche 1 bis 7 zur Verbindung der Fachwerkkonstruktion (14) mit der Fläche (9) vorgesehen ist.

9. Bauwerk nach Anspruch 8, **dadurch gekennzeichnet, dass** die Träger (2) des Verbundsystems (1) in der Fachwerkkonstruktion (14) sternförmig angeordnete I-Träger (2) sind, mit welchen die Fläche (9) durch Bolzen (3) verbunden ist.

10. Verfahren zur Herstellung eines Verbundsystems (1) nach einem der Ansprüche 1 bis 7, **dadurch gekennzeichnet, dass** die Bolzen (3) mit jeweils einem Träger (2) verbunden werden, wonach die Bolzen (3) zumindest teilweise mit dem aushärtbaren Material, insbesondere Beton, umgossen werden, wobei eine mit dem Träger (2) verbundene Schicht (4) aus dem ausgehärteten Material gebildet wird, und wobei eine sich zwischen den Trägern (2) erstreckende, freie Fläche (9) mit zumindest einer Abdeckung (12) abgedeckt wird, wobei das ausgehärtete Material auf die Abdeckung gegossen wird.

11. Verfahren nach Anspruch 10, **dadurch gekennzeichnet, dass** mehrere Bolzen (3) aufweisende Träger (2) durch eine durchgehende Schicht (4) aus aushärtbarem Material verbunden werden.

12. Verfahren nach Anspruch 10 oder 11, **dadurch gekennzeichnet, dass** die Bolzen (3) die zumindest eine Abdeckung überragen.

13. Verfahren nach Anspruch 12, **dadurch gekennzeichnet, dass** mehrere Abdeckungen nebeneinander angeordnet werden, wonach ein Zwischenraum zwischen den Abdeckungen mit einem Füllmaterial, insbesondere Mineralwolle (18), bevorzugt Steinwolle, ausgefüllt wird, wobei insbesondere eine ebene Unterlage für die Schicht (4) gebildet wird.

14. Verfahren nach Anspruch 12 oder 13, **dadurch gekennzeichnet, dass** eine zwei parallele Knicke (15) aufweisende und einen trapezförmigen Querschnitt an drei Seiten einschließende Abdeckung eingesetzt wird.

15. Verfahren nach einem der Ansprüche 10 bis 14, **dadurch gekennzeichnet, dass** in die Schicht (4) eine Heizung integriert wird.

## Claims

1. Composite (1) for a helicopter landing site comprising at least two beams (2) as well as a layer (4) of hardened material, which is provided on one side of the beams (2), said layer (4) being rigidly connected to the beams (2) by means of bolts (3) arranged on the beams (2) **characterised in that** the layer (4) is exclusively arranged between the surface of the beams, on which the bolts (3) are connected to the beams (2) and an area at a distance from this surface, so that the layer (4) is exclusively indirectly connected to the beams (2), wherein forces are transmitted through the bolts (3), wherein between the beams (2) and the layer (4) a cover covering a free area (9) extending between the beams (2) is arranged as concealed formwork, over which the bolts (3) project, wherein the hardened material has been poured onto the cover.

2. Composite system (1) according to claim 1 **characterised in that** through the hardened material above the bolt (3) a planar surface (9) approximately perpendicular to a bolt axis (10) is formed.

3. Composite system (1) according to claim 1 or 2 **characterised in that** the at least two beams (2) are provided with approximately parallel bolts (3) wherein the beams (2) are connected via the bolts (3) to the hardened material.

4. Composite system (1) according to any one of claims 1 to 3 **characterised in that** the layer (4) is at least partially, preferably continuously, arranged at a distance from the beam (2), wherein a layer distance (13) between the layer (4) and the beam (2) is preferably 10% to 90%, in particular 50% to 70%, of a height (8) of the layer (4).

5. Composite system (1) according to any one of claims 1 to 4 **characterised in that** the cover is a metal sheet (12) which has a bend (15) along its longitudinal direction.

6. Composite system (1) according to any one of claims 1 to 5 **characterised in that** arranged between the beam (2) and the layer (4) is a filling material, in particular mineral wool (18), preferably stone wool.

7. Composite system (1) according to any one of claims 1 to 6 **characterised in that** heating is provided in the layer (4) .

8. Structure, in particular a helicopter landing site, comprising a supporting framework structure (14) as well, connected to the framework structure (14), a surface (9) made of a hardened material for taking up pressure forces, **characterised in that** a composite system (1) according to any one of claims 1 to 7 is provided to connect the framework structure (14) with the surface (9) .

9. Structure according to claim 8 **characterised in that** the beams (2) of the composite system (1) in the framework structure (14) are I-beams (2) arranged in a star-shaped manner with which the surface (9) is connected by bolts (3) .

10. Method of producing the composite system (1) according to any one of claims 1 to 7 **characterised in that** the bolts (3) are each connected with a beam (2), after which the bolts (3) are at least partially encompassed by the hardenable material, in particular concrete, wherein a layer (4) of the hardened material is formed which is connected to the beam (2), and wherein a free surface (9) extending between the beams (2) is covered with at least one cover (12), wherein the hardened material is poured onto the cover.

11. Method according to claim 10 **characterised in that** several beams (2) which have bolts (3) are connected by a continuous layer (4) of hardenable material.

12. Method according to claim 10 or 11 **characterised in that** the bolts (3) project above the at least one cover.

13. Method according to claim 12 **characterised in that** several covers are arranged next to each other, whereby an intermediate space between the covers is filled with a filling material, in particular mineral wool (18), preferably rock wool, wherein, in particular an even substrate for the layer (4) is formed.

14. Method according to claim 12 or 13 **characterised in that** a cover having two parallel bends (15) and enclosing a trapezoidal cross-section on three sides is used.

15. Method according to any one of claims 10 to 14 characerised that a heater is integrated into the layer (4) .

## Revendications

1. Système composite (1) pour une piste d'atterrissage d'hélicoptères, comprenant au moins deux supports (2), ainsi qu'une couche (4) en matière durcie, qui est prévue sur une face des supports (2), laquelle couche (4) est reliée de manière rigide avec les supports (2) par des boulons (3) placés sur les supports (2), **caractérisé en ce que** la couche (4) est placée exclusivement entre la face supérieure des supports sur laquelle les boulons (3) sont reliés avec les supports (2) et une surface écartée de ladite face supérieure, de telle sorte que la couche (4) soit reliée exclusivement de manière indirecte avec les supports (2), des forces étant transmises par les boulons (3), entre les supports (2) et la couche (4) étant placé en tant que coffrage perdu un recouvrement couvrant une surface libre (9) s'étendant entre les supports (2), par-dessus lequel saillissent le boulons (3), la matière durcie ayant été coulée sur le recouvrement.

2. Système composite (1) selon la revendication 1, **caractérisé en ce que** la matière durcie au-dessus du boulon (3) forme une surface plane (9) approximativement perpendiculaire par rapport à une axe du boulon (10).

3. Système composite (1) selon la revendication 1 ou 2, **caractérisé en ce que** les au moins deux supports (2) sont prévus avec des boulons (3) approximativement parallèles, les supports (2) étant reliés par l'intermédiaire des boulons (3) à travers la matière durcie.

4. Système composite (1) selon l'une quelconque des revendications 1 à 3, **caractérisé en ce que** la couche (4) est placée au moins partiellement, de préférence en continu avec un écart par rapport au support (2), un écart de couche (13) entre la couche (4) et le support (2) s'élevant de préférence à de 10 % à 90 %, notamment à de 50 % à 70 % d'une hauteur (8) de la couche (4).

5. Système composite (1) selon l'une quelconque des revendications 1 à 4, **caractérisé en ce que** le recouvrement est une tôle (12) comportant des coudes (15) dans la direction longitudinale.

6. Système composite (1) selon l'une quelconque des revendications 1 à 5, **caractérisé en ce qu'**entre le support (2) et la couche (4) est placée une matière de charge, notamment une laine minérale (18), de préférence de la laine de roche.

7. Système composite (1) selon l'une quelconque des revendications 1 à 6, **caractérisé en ce que** dans la couche (4) est prévu un chauffage.

8. Ouvrage de construction, notamment piste d'atterrissage pour des hélicoptères, comportant une structure d'ossature (14) porteuse, ainsi qu'une surface (9) en une matière durcie, reliée avec la structure d'ossature (14) porteuse, pour l'absorption de forces de pression, **caractérisé en ce qu'**il est prévu un système composite (1) selon l'une quelconque des revendications 1 à 7 pour la liaison de la structure d'ossature (14) porteuse avec la surface (9) .

9. Ouvrage de construction selon la revendication 8, **caractérisé en ce que** les supports (2) du système composite (1) dans la structure d'ossature porteuse (14) sont des supports en I (2) placés en forme d'étoile, à l'aide desquels la surface (9) est reliée par des boulons (3).

10. Procédé, destiné à fabriquer un système composite (1) selon l'une quelconque des revendications 1 à 7, **caractérisé en ce qu'**on relie les boulons (3) avec chaque fois un support (2), suite à quoi, on enrobe par coulée les boulons (3) au moins en partie avec la matière durcissable, notamment du béton, une couche (4) reliée avec le support (2) étant créée à partir de la matière durcie, et une surface libre (9) s'étendant entre les supports (2) étant recouverte avec au moins un recouvrement (12), la matière durcie étant coulée sur le recouvrement.

11. Procédé selon la revendication 10, **caractérisé en ce qu'**on relie plusieurs supports (2) comportant des boulons (3) par une couche (4) continue en matière durcissable.

12. Procédé selon la revendication 10 ou 11, caractérisé en que les boulons (3) saillissent par-dessus l'au moins un recouvrement.

13. Procédé selon la revendication 12, **caractérisé en ce qu'**on place côte à côte plusieurs recouvrements, suite à quoi, on remplit un espace intermédiaire entre les recouvrements avec une matière de charge, notamment de la laine minérale (18), de préférence de la laine de roche, notamment un support plan étant formé pour la couche (4).

14. Procédé selon la revendication 12 ou 13, **caractérisé en ce qu'**on utilise un recouvrement comportant deux plis (15) parallèles et englobant une section transversale de forme trapézoïdale sur trois côtés.

15. Procédé selon l'une quelconque des revendications 10 à 14, **caractérisé en ce que** dans la couche (4), on intègre un chauffage.
